# EUROPÄISCHE PATENTSCHRIFT

(11) **EP 1 530 507 B1**
(45) Veröffentlichungstag und Bekanntmachung des Hinweises auf die Patenterteilung: **24.05.2006**
(21) Anmeldenummer: 03792389.3
(22) Anmeldetag: 20.08.2003
(51) Int. Cl.: B21B 27/02

(54) **RINGHALTERUNG FÜR WALZRING**
ANNULAR HOLDING DEVICE FOR A ROLL RING
ATTACHE ANNULAIRE POUR BAGUE DE LAMINAGE

(30) Priorität: 21.08.2002 DE 20212838 U
(43) Veröffentlichungstag der Anmeldung: 18.05.2005
(73) Patentinhaber: Kark AG, 21149 Hamburg (DE)
(72) Erfinder: KARK, Uwe, 21149 Hamburg (DE)
(74) Vertreter: Glawe, Delfs, Moll
(86) Internationale Anmeldenummer: PCT/EP2003/009220
(87) Internationale Veröffentlichungsnummer: WO 2004/018119

(56) Entgegenhaltungen:
- DE-A- 2 528 157
- DE-A- 3 720 144
- US-A- 4 008 598
- PATENT ABSTRACTS OF JAPAN vol. 008, no. 136 (M-304), 23. Juni 1984 (1984-06-23) -& JP 59 035816 A (HITACHI KINZOKU KK), 27. Februar 1984 (1984-02-27)

## Beschreibung

Für die Befestigung von Walzringen auf Walzwellen verwendet man eine axial wirkende Spanneinrichtung. Sie wirkt zwischen zwei ringförmigen Gegenlagern, von denen wenigstens eines für die Montage der Walzringe entfernbar ist. Sie werden in der Regel von einem einstückig mit der Welle verbundenen Wellenbund einerseits und einem Gewindering andererseits gebildet, der auf einem Wellengewinde sitzt (US-A-4008598, US-A-4117705). Wenn die Welle an der Stelle des Gewinderings einer Biegebeanspruchung unterworfen ist, trägt das Gewinde nicht über den gesamten Umfang gleichmäßig, sondern hauptsächlich auf der Biegedruckseite der Welle. Da diese Seite umläuft, ist das Gewinde einer Wechselbeanspruchung ausgesetzt, die zum Versagen führen kann.

Der Erfindung liegt die Aufgabe zugrunde, eine Anordnung zu schaffen, die der Beanspruchung besser gewachsen ist als ein Gewindering.

Die erfindungsgemäße Lösung besteht in einer Walzanordnung gemäß Anspruch 1, bei welcher das entfernbare Gegenlager von einem geteilten, an einem Wellenbund abgestützten Ring gebildet ist, dessen Teile durch einen sie umgebenden aufgeschrumpften Fixierring gehalten sind. Dieser nimmt die auf den geteilten Ring wirkenden, extrem hohen Torsionskräfte auf. Er ist zweckmäßigerweise vorgespannt. Der Außendurchmesser des Wellenbunds, an welchem sich der geteilte Ring abstützt, sollte für Montagezwecke geringer als der Innnendurchmesser des Walzrings sein.

Es ist bekannt (DE-A-3022554, DE-A-2118627), geteilte Ringe, die in einer Wellennut sitzen, zur Aufnahme axialer Kräfte zu verwenden. Das gilt aber nicht, wenn extrem hohe Torsionskräfte wirken. Diese werden erfindungsgemäß durch den Fixierring aufgenommen.

Die Erfindung wird im folgenden näher unter Bezugnahme auf die Zeichnung erläutert, die ein vorteilhaftes Ausführungsbeispiel veranschaulicht. Es zeigen:
- Fig. 1: Eine teilweise geschnittene Ansicht der Gesamtanordnung,
- Fig. 2: einen Längsschnitt durch den betreffenden Teil der Walzanordnung in größerem Maßstab,
- Fig. 3: einen Querschnitt,
- Fig. 4: eine alternative Anordnung und

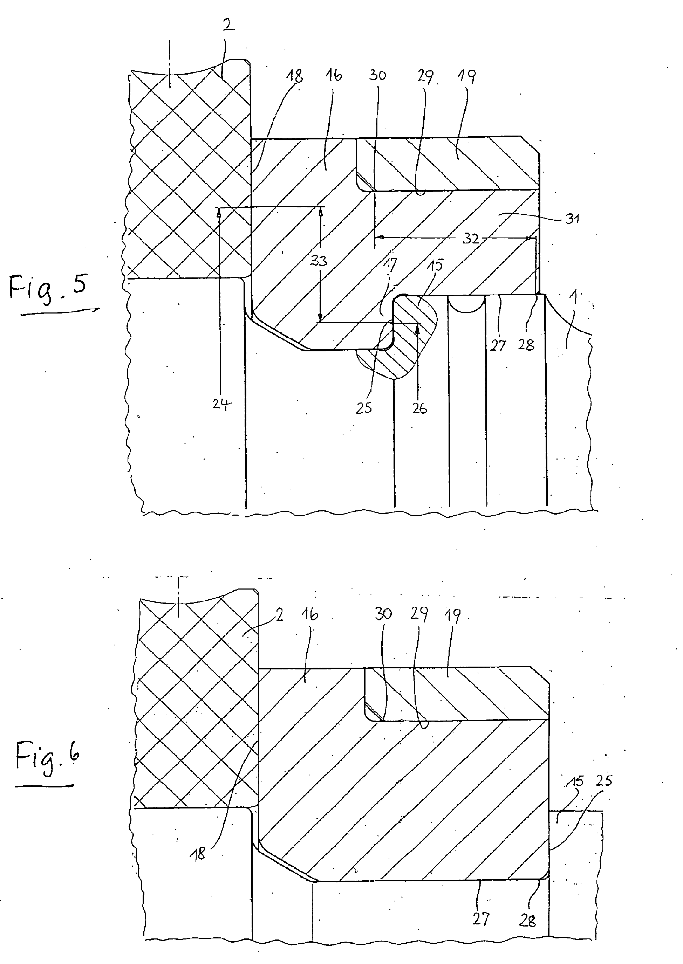

- Fig. 5 und 6: Teildarstellungen mit unterschiedlicher Aus bildung des geteilten Rings und des fixierten Rings.

Auf der Walzwelle 1 sind die Walzringe 2 aufgezogen. Durch eine Spanneinrichtung 3 sind sie axial verspannt. Dabei stützen sie sich einerseits an einem von dem Wellenbund 4 gebildeten Gegenlager und andererseits an einem entfernbaren Gegenlager 5 ab. Die Welle ist in den Bereichen 6 gelagert und unterliegt einer Biegebeanspruchung.

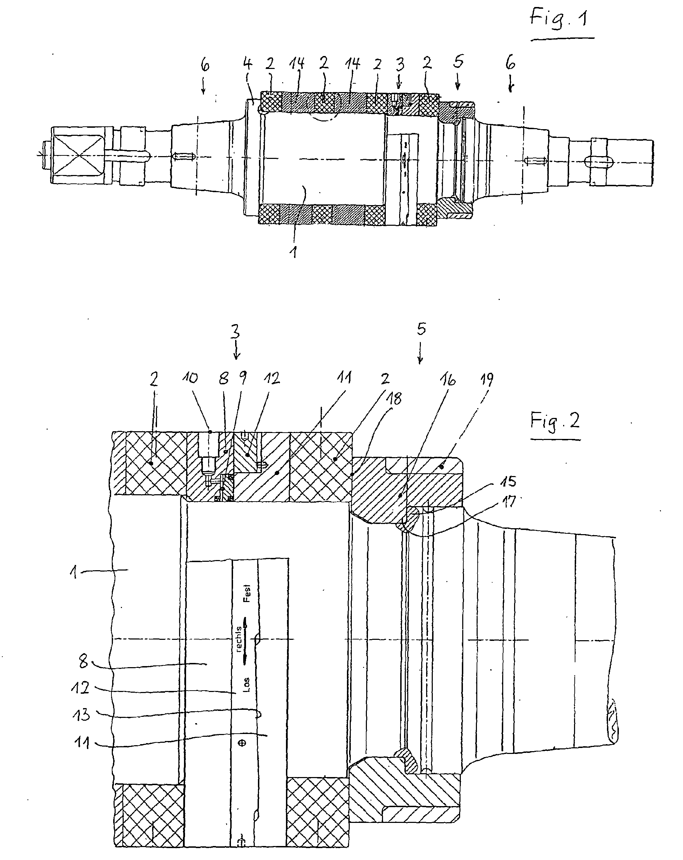

Einzelheiten der Spanneinrichtung 3 und des entfernbaren Gegenlagers 5 ergeben sich aus Figur 2. Die Spanneinrichtung entspricht einem bekannten Prinzip (EP-B-343440). Ein Druckring 8, der sich axial am benachbarten Walzring 2 abstützt, enthält eine Kolbenzylindereinrichtung 9, der ein Druckmittel über den Anschluß 10 zugeleitet werden kann. Die Kolbenzylindereinrichtung 9 drückt axial gegen einen sogenannten Keilring 11, der in einem Ringausschnitt einen Verstellring 12 aufnimmt. Die einander zugewendeten Flanken 13 des Keilrings 11 und des Verstellring 12 sind sägezahnförmig gestaltet, so daß durch Verdrehung des Verstellrings 12 gegenüber dem Keilring 11 deren gemeinsame axiale Länge verstellt werden kann. Die axiale Distanz zwischen den einander zugewendeten Stirnflächen der Gegenlager 4 und 5 entspricht mit geringem Montagespiel der gemeinsamen Länge der Walzringe 2, der Zwischenringe 14 und der Spanneinrichtung 3, wenn letztere sich in ihrem axial kürzesten Einstellzustand befindet. Nachdem diese Teile auf der Welle 1 montiert worden sind, wird die Kolbenzylindereinrichtung 9 mit Druck beaufschlagt, der Verstellring 12 wird festgedreht und die Kolbenzylindereinrichtung 9 druckentlastet. Die Walzringe sind dann zwischen den Gegenlagern 4 und 5 durch die Spanneinrichtung 3 axial gespannt. Soweit kann die Anordnung als bekannt betrachtet werden.

An die Stelle des Verstellrings 12 und die Sägezähne des Keilrings 11 kann ein geteilter Einsatzring treten, dessen axiale Abmessung dem Abstand der Ringe 8 und 11 im hydraulisch gespannten Zustand entspricht (US-A-4117705).

Das entfernbare Widerlager 5 besteht aus einem Wellenbund 15 und einem vorzugsweise hälftig geteilten Ring 16, der sich mit einer Ringnase 17 an der Stirnfläche des Bundes 15 abstützt. Dem benachbarten Walzring 2 wendet er eine Anschlagfläche 18 zu. Da der mittlere Durchmesser der Anschlagfläche 18 größer ist, als der mittlere Durchmesser der Stirnfläche des Bunds 15, unterliegt der Ring 16 einem Torsionsmoment, das ihn in seinem dem Walzring 2 benachbarten Bereich von der Welle weg zu tordieren bestrebt ist. Dies wird durch einen Fixierring 19 verhindert, der dem geteilten Ring 16 aufgeschrumpft ist. Seine Vorspannung ist so groß, daß die Teile des Rings 16 sich unter der Axialkraft nicht von der Welle abheben können.

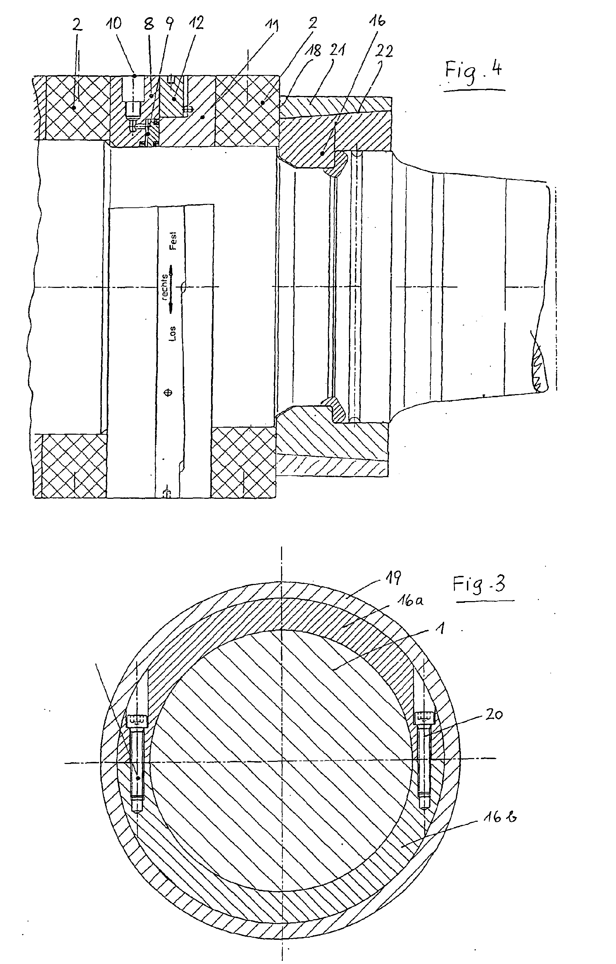

Wie aus Figur 3 erkennbar, werden die Teile 16a und 16b des Rings 16 durch Schrauben 20 oder andere Befestigungsmitttel zusammengehalten, die aber mehr der vorläufigen Montagefixierung der Ringteile 16a, 16b als ihrer Fixierung unter den betrieblich wirkenden Kräften dienen. Sie können durch beliebige andere, vorläufig wirkende Fixiermittel ersetzt werden oder ganz entfallen.

Der geteilte Ring 16 wendet dem Walzring bzw. einem zwischen dem Walzring 2 und dem geteilten Ring 16 möglicherweise befindlichen Zwischenring eine erste Anschlagfläche 18 zu. Die über diese Fläche übertragene Axialkraft wird über eine zweite Anschlagfläche 25 auf den Wellenbund 15 übertragen. Die erste Anschlagfläche 18 hat einen mittleren Radius 24 und die Anschlagfläche 25 hat einen mittleren Radius 26. Das Torsionsmoment, das durch die Unterschiedlichkeit der mittleren Radien 24, 26 auf den geteilten Ring 16 wirkt, ist der Differenz dieser Radien proportional.

Der geteilte Ring 16 stützt sich innenseitig (also in Radialrichtung) über die Fläche 27 an einer entsprechenden Außenfläche der Welle 1 ab. Diese Innenfläche 27 hat eine walzringferne Grenze 28. Wenn der geteilte Ring 16 der erwähnten Torsionskraft nachgeben will, so stützt er sich an der Innenfläche 27 und insbesondere an deren walzringfernem Grenzpunkt 28 an der Welle 1 ab, während er walzringseitig von der Grenze 28 dazu neigt, sich von der Welle abzuheben. Diese Abhebung wird durch den Fixierring 19 gehindert. Das von ihm um den Punkt 28 erzeugte, der Torsionsverformung entgegengesetzte Torsionsmoment ist um so größer, je größer sein axialer Abstand von dem Punkt 28 ist. Die Erfindung lehrt deshalb, den axialen Abstand *32* zwischen der walzringnahen Grenze 30 der inneren Fläche 29, über welche sich der Fixierring 19 an dem geteilten Ring 16 abstützt, *und der walzringfernen Grenze 28 der Innenfläche 27* möglichst groß zu machen, nämlich mindestens etwa so groß wie die Differenz *33* zwischen den mittleren ersten und zweiten Radien 24, 26. Genauer gesagt soll sie mindestens drei Viertel dieser Radiusdifferenz betragen. Vorzugsweise ist sie größer als die Radiusdifferenz.

In manchen Fällen hat die Anschlagfläche 18 eine so große radiale Ausdehnung, daß vernünftigerweise nicht angenommen werden kann, daß sie über die gesamte radiale Ausdehnung voll an der axialen Kraftübertragung beteiligt ist. In diesen Fällen ist von der gesamten Anschlagfläche nur ein radial innen liegender Teil bei der Bemessung bei des ersten mittleren Radius zu berücksichtigen, nämlich derjenige Teil, der hauptsächlich an der axialen Kraftübertragung beteiligt ist.

Im dargestellten Beispiel ist der geteilte Ring 16 mit einem walzringfernen, achs-parallelen Fortsatz 31 versehen, damit die genannte Größenordnung des axialen Abstands zwischen der walzringnahen Grenze 30 der Innenfläche 29 des Fixierrings 19 und der walzringfernen Grenze 28 der Innenfläche 27 des geteilten Rings 16 eingehalten werden kann. Im Ausführungsbeispiel der Fig. 6 ist zu dem selben Zweck der geteilte Ring 16 insgesamt entsprechend lang ausgeführt, wobei die zweite Anschlagfläche 25 auf der walzringfernen Seite der Innenfläche 27 des geteilten Rings 16 liegt.

In der Ausführungsalternative gemäß Figur 4, die - soweit im folgenden nicht beschrieben - mit der Ausführung der Figur 2 übereinstimmt, wirkt der Fixierring 21 über eine konische Fläche 22 mit dem geteilten Ring 16 zusammen. Die Dimensionen sind so gewählt, daß dann, wenn der Fixierring 21 vollständig, d.h. mit fluchtender Stirnfläche 18, auf den geteilten Ring 16 aufgeschoben ist, der Fixierring so stark vorgespannt ist, daß seine nach radial innen wirkende Vorspannkraft größer ist als die unter den axialen Betriebskräften auf ihn radial nach außen wirkenden Kräfte. Dadurch wird der Ring 16 am Abheben von der Welle 1 gehindert.

## Patentansprüche

1. Walzanordnung mit einer Walzwelle (1) und mindestens einem darauf zwischen zwei ringförmigen Gegenlagern (4,5) gespannten Walzring (2), von denen mindestens eines (5) entfernbar ist, **dadurch gekennzeichnet, daß** das entfernbare Gegenlager (5) von einem geteilten, an einem Wellenbund (15) abgestützten Ring gebildet ist, dessen Teile (16a, 16b) durch einen sie umgebenden, *aufgeschrumpften* Fixierring (19,21) gehalten sind.

2. Walzanordnung nach Anspruch 1, **dadurch gekennzeichnet, daß** der Fixierring vorgespannt ist.

3. Walzanordnung nach Anspruch 1 oder 2, **dadurch gekennzeichnet, daß** der Außendurchmesser des Wellenbunds (15) nicht größer als der Innendurchmesser des walzrings (2) ist.

4. Walzanordnung nach einem der Ansprüche 1 bis 3, **dadurch gekennzeichnet, daß** der geteilte Ring (16) dem auf der Walzringseite benachbarten Ring (2) eine erste Anschlagfläche (18) zuwendet, die einen ersten mittleren Radius (24) aufweist, daß der geteilte Ring (16) dem Wellenbund (15) eine zweite Anschlagfläche (25) zuwendet, die einen zweiten mittleren Radius (26) aufweist, daß der geteilte Ring (16) eine sich an der Welle (1) abstützende Innenfläche (27) aufweist, die eine walzringferne Grenze (28) aufweist, daß der Fixierring (19) über eine innere Fläche (29) an dem geteilten Ring (16) anliegt, die eine walzringnahe Grenze (30) aufweist, und daß die achs-parallel gemessene Distanz (32) zwischen der walzringfernen Grenze (28) und der walzringnahen Grenze (30) mindestens so groß ist, wie drei Viertel der Differenz (33) zwischen den ersten und zweiten mittleren Radien (24, 26).

## Claims

1. A roll arrangement comprising a roll shaft (1) and at least one roll ring (2) clamped thereon between two annular abutments (4, 5), of which at least one (5) can be removed, **characterized in that** the removable abutment (5) is formed by a split ring which is supported on a shaft collar (15) and whose parts (16a, 16b) are held by a shrunk-on fixing ring (19, 21) which surrounds it.

2. The roll arrangement as claimed in claim 1, **characterized in that** the fixing ring is prestressed on.

3. The roll arrangement as claimed in claim 1 or 2, **characterized in that** the outside diameter of the shaft collar (15) is not greater than the inside diameter of the roll ring (2).

4. The roll arrangement as claimed in one of claims 1 to 3, **characterized in that** the split ring (16) turns a first stop surface (18) toward the ring (2) which is adjacent on the roll-ring side, this first stop surface (18) having a first mean radius (24), **in that** the split ring (16) turns a second stop surface (25) toward the shaft collar (15), this second stop surface (25) having a second mean radius (26), **in that** the split ring (16) has an inner surface (27) which is supported on the shaft (1) and has a boundary (28) remote from the roll ring, **in that** the fixing ring (19) bears against the split ring (16) via an inner surface (29) which has a boundary (30) close to the roll ring, and **in that** the axially parallel measured distance (32) between the boundary (28) remote from the roll ring and the boundary (30) close to roll ring is at least as large as three quarters of the difference (33) between the first and the second mean radii (24, 26).

## Revendications

1. Agencement de laminage comportant un arbre de cylindre (1) et au moins une bague de laminage (2) serrée entre deux paliers supports annulaires (4, 5), dont au moins l'un (5) est amovible, **caractérisé en ce que** le palier support amovible (5) est formé par une bague scindée en appui contre un collet de l'arbre (15) et dont les parties (16a, 16b) sont maintenues par une bague de fixation (19, 21) périphérique frettée sur lesdites parties.

2. Agencement de laminage selon la revendication 1, **caractérisé en ce que** la bague de fixation est précontrainte.

3. Agencement de laminage selon la revendication 1 ou 2, **caractérisé en ce que** le diamètre extérieur du collet de l'arbre (15) n'est pas supérieur au diamètre intérieur de la bague de laminage (2).

4. Agencement de laminage selon l'une quelconque des revendications 1 à 3, **caractérisé en ce que** la bague scindée (16) comporte une première surface de butée (18), qui est orientée vers la bague (2) adjacente du côté bague de laminage et qui a un premier rayon moyen (24), **en ce que** la bague scindée (16) comporte une deuxième surface de butée (25) orientée vers le collet de l'arbre (15) et qui a un deuxième rayon moyen (26), **en ce que** la bague scindée (16) comporte une surface intérieure (27), qui vient en appui sur l'arbre (1) et qui comporte une limite (28) éloignée de la bague de laminage, **en ce que** la bague de fixation (19) est en contact avec la bague scindée (16) par l'intermédiaire d'une surface intérieure (29) qui comporte une limite (30) proche de la bague de laminage et **en ce que** la distance (32), mesurée parallèlement à l'axe entre la limite (28) éloignée de la bague de laminage et la limite (30) proche de la bague de laminage, est au moins égale aux trois quarts de la différence (33) entre le premier et le deuxième rayon moyen (24, 26).
